# FASCICULE DE BREVET EUROPEEN

(11) **EP 2 480 969 B1**
(45) Date de publication et mention de la délivrance du brevet: **08.01.2020**
(21) Numéro de dépôt: 10770565.9
(22) Date de dépôt: 15.09.2010
(51) Int. Cl.: G06F 9/50, G06F 9/48

(54) **SYSTÈME ET PROCÉDÉ DE GESTION DE L'EXECUTION ENTRELACÉE DE FILS D'INSTRUCTIONS**
SYSTEM UND VERFAHREN ZUR VERWALTUNG DER VERSCHACHTELTEN DURCHFÜHRUNG VON BEFEHL-THREADS
SYSTEM AND METHOD FOR MANAGING INTERLEAVED EXECUTION OF COMMAND THREADS

(30) Priorité: 25.09.2009 FR 0956660
(43) Date de publication de la demande: 01.08.2012
(73) Titulaire: Bull S.A.S., 78340 Les Clayes-sous-Bois (FR)
(72) Inventeur: COUVEE, Philippe, F-38190 Villard Bonnot (FR); JEAUGEY, Sylvain, F-38240 Meylan (FR); DERR, Simon, F-38400 Saint-Martin d´Hères (FR)
(74) Mandataire: Bonnet, Michel
(86) Numéro de dépôt international: PCT/FR2010/051918
(87) Numéro de publication internationale: WO 2011/036377

(56) Documents cités:
- WO-A1-2006/013438
- US-A1- 2004 143 833
- KAM-MUN CHONG ET AL: "Enhanced Parallel Thread Scheduling for Java Based Applications on Multi-Core Architecture", ADVANCED COMMUNICATION TECHNOLOGY, 2008. ICACT 2008. 10TH INTERNATIONAL CONFERENCE ON, IEEE, PISCATAWAY, NJ, USA, 17 février 2008 (2008-02-17), pages 1144-1149, XP031245320, ISBN: 978-89-5519-136-3

## Description

La présente invention concerne un système informatique de gestion de l'exécution de fils d'instructions, comportant au moins une unité centrale de traitement à exécution entrelacée de plusieurs fils d'instructions sur plusieurs processeurs virtuels issus de cette même unité centrale de traitement et un gestionnaire de distribution de l'exécution des fils d'instructions sur les processeurs virtuels. Elle concerne également un procédé correspondant, une application de ce procédé à une grappe de serveurs et un programme d'ordinateur comportant des instructions pour l'exécution de ce procédé.

Dans la suite de la description, on entend par « système informatique » tout système apte à exécuter les instructions d'un programme d'ordinateur et présentant pour cela au moins un processeur comportant au moins une unité centrale de traitement, appelée également cœur de calcul du processeur ou CPU (de l'Anglais « Central Processing Unit »). On notera qu'un processeur peut ne comporter qu'un seul cœur de calcul ou plusieurs cœurs de calcul. Dans un ordre de complexité croissante, un système informatique selon l'invention peut être constitué d'un microprocesseur à un ou plusieurs cœurs de calcul, d'un simple micro-ordinateur comportant un ou plusieurs microprocesseurs, ou d'un ensemble plus complexe dans lequel plusieurs micro-ordinateurs sont interconnectés via un réseau de transmission de données. La complexité d'un système informatique dans lequel l'invention peut être mise en œuvre dépend principalement de l'application visée.

On entend par « processus informatique », plus généralement qualifié de « process », un ensemble d'instructions à exécuter par une unité centrale de traitement (i.e. un cœur de calcul) d'un processeur dans un espace mémoire alloué spécifiquement, à l'aide éventuellement d'autres ressources. Un programme d'ordinateur étant lui-même constitué d'un ensemble structuré d'instructions, un processus informatique peut alors être considéré comme une instance à exécuter d'un programme d'ordinateur ou d'une portion de celui-ci. Un même programme pouvant être exécuté plusieurs fois (parallèlement, successivement, sur un même processeur ou sur des processeurs différents), il peut donc engendrer plusieurs processus informatiques.

Un processus informatique ne comporte pas nécessairement une unique séquence linéaire d'instructions, mais peut en solliciter plusieurs de façon asynchrone. On entend alors par « fil d'instructions », plus généralement qualifié de « thread », une telle séquence linéaire d'instructions participant à l'exécution d'un processus informatique. Il en résulte que du point de vue de l'exécution des instructions, un processus informatique peut toujours être considéré comme étant un fil d'instructions ou un ensemble de fils d'instructions.

On entend par « unité centrale de traitement à exécution entrelacée de plusieurs fils d'instructions sur plusieurs processeurs virtuels issus de cette même unité centrale de traitement » une unité centrale de traitement présentant un mécanisme d'augmentation du parallélisme d'exécution des fils d'instructions par un partage de certaines de ses ressources internes : notamment son « pipeline » d'exécution, ses registres et ses mémoires caches. Une telle unité centrale de traitement présente alors autant de processeurs virtuels que de fils d'instructions pouvant partager simultanément ses ressources. Du point de vue d'un utilisateur, tout se passe comme si au lieu d'une seule unité centrale de traitement, il y en avait plusieurs, plus précisément autant que de processeurs virtuels qu'elle présente.

Ce mécanisme est généralement qualifié de « hyper threading » ou de « simultaneous multi threading ». Un objectif des unités centrales de traitement le mettant en œuvre est de tirer parti des périodes d'inactivité créées par l'attente de données en provenance de l'espace mémoire partagé d'un fil d'instructions. Concrètement, lorsqu'un fil d'instructions est dans une telle situation d'attente, l'unité centrale de traitement qui l'exécute passe automatiquement à l'exécution d'un autre fil d'instructions, donnant ainsi l'impression de présenter plusieurs processeurs virtuels distincts.

Le système d'exploitation Linux (marque déposée) supporte actuellement un tel mécanisme et présente ainsi à l'utilisateur, lorsqu'il s'exécute sur un microprocesseur intégrant un mécanisme d'hyper threading, les N processeurs virtuels issus de ce microprocesseur lorsque ce mécanisme est activé. Il met également en œuvre avantageusement un algorithme d'équilibrage de charges lors de l'exécution de fils d'instructions qui doit alors prendre en compte les spécificités des processeurs virtuels : en particulier, il ne doit pas décharger un processeur virtuel en basculant les fils d'instructions sur l'autre processeur virtuel d'une même unité centrale de traitement. Cette contrainte alourdit singulièrement l'algorithme d'équilibrage de charge.

Concrètement, cette contrainte est notamment problématique dans des applications de calcul temps réel, de traitements embarqués, par exemple pour des microprocesseurs impliqués dans des applications de téléphonie mobile.

Selon un second exemple concret, dans un environnement de supercalculateur de type HPC (de l'Anglais « High Performance Computing ») comportant plusieurs nœuds de traitement organisés en grappe de serveurs, l'utilisateur souhaite même contrôler finement le placement de ses applications sur les unités centrales de traitement, par exemple pour tirer parti de caches partagés qui favorisent tel ou tel mécanisme de communication.

Il existe alors des possibilités de placement fin des fils d'instructions, via des appels système d'interface de programmation applicative de gestion de ces fils d'instructions, permettant à un utilisateur (i.e. le programmeur), de spécifier le comportement d'un ordonnanceur de tâches du système d'exploitation vis-à-vis d'un fil d'instructions, mais cela implique pour l'application concernée une connaissance de la topologie du système informatique et un travail de placement qui peut parfois entrer en conflit avec d'autres couches logicielles.

Le document WO2006/013438 décrit un dispositif pour allouer des applications à des processeurs virtuels.

Le document US2004/0143833 décrit un procédé pour allouer des fils d'exécution à des ressources en fonction de leur type.

La prise en compte des spécificités des processeurs virtuels apparaît en fait complexe. Elle devient même vraiment problématique, voire ingérable automatiquement, dans une application de supercalculateur HPC.

Il peut ainsi être souhaité de prévoir un système de gestion de l'exécution entrelacée de fils d'instructions qui permette de s'affranchir au moins partiellement des problèmes et contraintes précités.

L'invention a donc pour objet un système informatique de gestion de l'exécution de fils d'instructions, comportant au moins une unité centrale de traitement à exécution entrelacée de plusieurs fils d'instructions sur plusieurs processeurs virtuels issus de cette même unité centrale de traitement et un gestionnaire de distribution de l'exécution des fils d'instructions sur les processeurs virtuels, caractérisé en ce qu'il comporte des moyens de classification des fils d'instructions à exécuter selon plusieurs types prédéterminés et en ce que le gestionnaire de distribution de l'exécution des fils d'instructions est conçu pour orienter chaque fil d'instructions à exécuter vers un processeur virtuel en fonction de son type.

Ainsi, en classant les fils d'instructions par types et en les orientant de façon systématique vers tel ou tel processeur virtuel en fonction de leur type à l'aide du gestionnaire de distribution de l'exécution des fils d'instructions, on préserve les ressources de calcul. Il en résulte donc une meilleure utilisation de l'unité centrale de traitement et une accélération de l'exécution de l'application concernée. En outre on limite les risques d'erreurs dont un utilisateur (le programmeur) pourrait être à l'origine à cause du mécanisme d'hyper threading. Un système informatique selon l'invention peut en outre comporter des moyens d'association de chaque processeur virtuel de cette même unité centrale de traitement à l'un de ces types prédéterminés et le gestionnaire de distribution de l'exécution des fils d'instructions peut être conçu pour orienter chaque fil d'instructions à exécuter vers un processeur virtuel dont le type est identique au sien.

Ainsi, le gestionnaire de distribution des fils d'instructions n'a plus qu'à se soucier de sélectionner, le cas échéant, une unité centrale de traitement pour un fil d'instructions, le choix précis d'un processeur virtuel étant alors automatiquement guidé par le type du fil d'instructions. Il en résulte que le mécanisme d'hyper threading peut être caché à l'utilisateur. Il n'y a donc plus aucun risque que celui-ci engendre des erreurs à cause d'une mauvaise appréhension de ce mécanisme. En outre, les performances sont encore améliorées parce que les fils d'instructions sont automatiquement orientés vers les bons processeurs virtuels.

L'unité centrale de traitement comporte deux processeurs virtuels, l'un associé à un premier type de fils d'instructions, l'autre associé à un second type de fils d'instructions, et chaque processus informatique à exécuter est soit du premier type, soit du second type:
- le premier type de fils d'instructions, qualifié de « calcul », est relatif, pour un programme destiné à être exécuté par le système informatique de manière à fournir un résultat, à des fils d'instructions participant à l'exécution de ce programme pour la production directe du résultat, et
- le second type de processus, qualifié de « service », est relatif à des fils d'instructions participant à l'exécution de ce programme pour offrir des services annexes aux fils d'instructions de type « calcul ».

De façon optionnelle, un système informatique selon l'invention peut comporter au moins deux unités centrales de traitement, chacune à exécution entrelacée de plusieurs fils d'instructions sur plusieurs processeurs virtuels issus de cette même unité centrale de traitement, et le gestionnaire de distribution de l'exécution des fils d'instructions peut être conçu pour sélectionner une unité centrale de traitement pour chaque fil d'instructions à exécuter, indépendamment des processeurs virtuels qu'elle présente.

L'invention a également pour objet un procédé de gestion de l'exécution entrelacée de plusieurs fils d'instructions sur plusieurs processeurs virtuels issus d'une même unité centrale de traitement d'un système informatique, comportant une étape de distribution de l'exécution des fils d'instructions sur les processeurs virtuels, caractérisé en ce qu'il comporte une étape préalable de classification des fils d'instructions à exécuter selon plusieurs types prédéterminés et en ce que, lors de l'étape de distribution de l'exécution des fils d'instructions, chaque fil d'instructions à exécuter est orienté vers un processeur virtuel en fonction de son type.

De façon optionnelle, lors de l'étape de classification, chaque fil d'instructions est classé dans un type sur la base d'un paramètre identifiant ce type dans une fonction d'interface de programmation applicative de gestion du fil d'instructions.

De façon optionnelle également, lors de l'étape de classification, chaque fil d'instructions est classé dans un type sur la base d'un paramètre identifiant ce type dans une commande d'exécution de programme impliquant l'exécution de ce fil d'instructions.

L'invention a également pour objet l'application d'un procédé tel que défini précédemment à la gestion de l'exécution de plusieurs fils d'instructions sur plusieurs nœuds de traitement d'une grappe de serveurs de type supercalculateur, dans laquelle chaque nœud de traitement comporte au moins une unité centrale de traitement à exécution entrelacée de plusieurs fils d'instructions sur plusieurs processeurs virtuels issus de cette même unité centrale de traitement.

Enfin, l'invention a également pour objet un programme d'ordinateur téléchargeable depuis un réseau de communication et/ou enregistré sur un support lisible par ordinateur et/ou exécutable par un processeur, notamment système d'exploitation d'un ordinateur, caractérisé en ce qu'il comprend des instructions de code de programme pour l'exécution des étapes d'un procédé de gestion de l'exécution entrelacée de plusieurs fils d'instructions tel que défini précédemment lorsque ledit programme est exécuté sur un ordinateur.

L'invention sera mieux comprise à l'aide de la description qui va suivre, donnée uniquement à titre d'exemple et faite en se référant aux dessins annexés dans lesquels :
- la figure 1 représente schématiquement la structure générale d'une installation comportant au moins un système informatique selon un mode de réalisation de l'invention,
- la figure 2 illustre les étapes générales successives d'un procédé de gestion de l'exécution entrelacée de plusieurs processus informatiques pouvant être mis en œuvre par l'installation de la figure 1, selon un mode de réalisation de l'invention.

Indépendamment de toute application, l'invention, dont un mode de réalisation va maintenant être détaillé, peut être mise en œuvre dans tout système informatique présentant au moins une unité centrale de traitement à exécution entrelacée de plusieurs fils d'instructions sur plusieurs processeurs virtuels issus de cette même unité centrale de traitement et un gestionnaire de distribution de l'exécution des fils d'instructions sur les processeurs virtuels.

Dans le cas le plus simple, l'invention peut ainsi être mise en œuvre dès lors que l'on dispose d'un microprocesseur intégrant un mécanisme d'hyper threading. Des applications de calcul en temps réel et/ou embarquées peuvent ainsi en tirer profit.

Dans des applications plus complexes de dispositifs informatiques en réseau ou de supercalculateurs HPC, chaque dispositif comportant au moins un microprocesseur peut avantageusement mettre en œuvre l'invention.

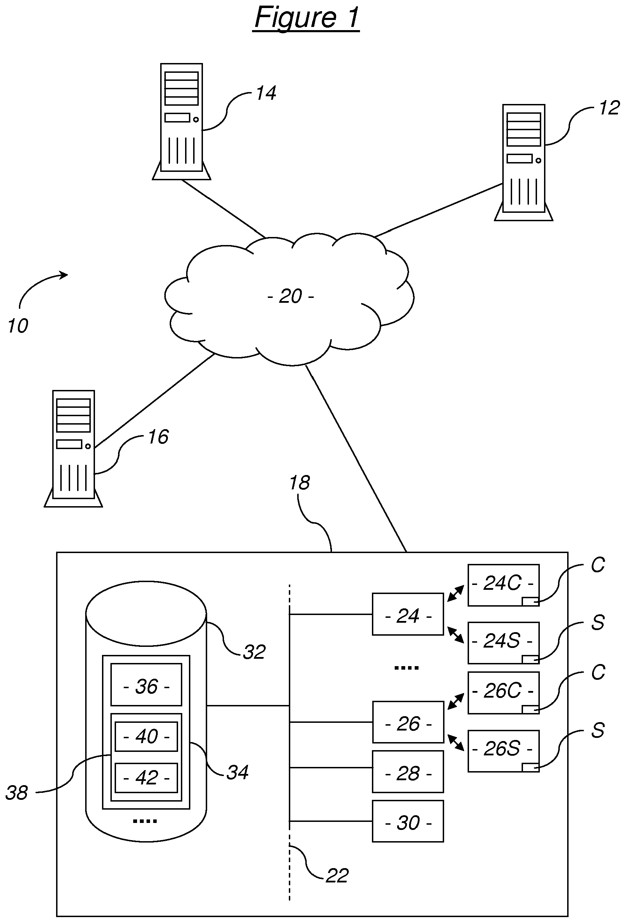

Dans le mode de réalisation représenté sur la figure 1, c'est une application de calculateur HPC qui va être détaillée pour illustrer un mode de réalisation de l'invention. C'est en effet une application industrielle particulièrement importante de l'invention. Mais il est clair au vu de ce qui précède que l'invention ne se limite pas à une telle installation de calculateur HPC.

L'installation 10 de dispositifs informatiques 12, 14, 16, 18 illustrée sur la figure 1 est par exemple une représentation très simplifiée et incomplète d'un calculateur HPC organisé en grappe de serveurs interconnectés à l'aide d'au moins un réseau de transmission de données 20 à très large bande. Cette installation 10 comporte par exemple notamment des dispositifs informatiques formant noeuds de calcul, identifiés par les références 12, 14, 16 et 18, et des dispositifs informatiques formant nœuds de service, d'administration ou de stockage (non représentés). La structure générale des nœuds de calculs 12, 14, 16 et 18 peut être la même, mais seule celle du dispositif informatique 18 sera détaillée ci-dessous.

Le dispositif informatique 18, par exemple un serveur de calcul de type micro-ordinateur, comporte :
- un bus de communication 22 auquel sont reliés une première unité centrale de traitement 24 et une seconde unité centrale de traitement 26 pour l'exécution de processus informatiques issus de programmes d'ordinateur et plus particulièrement de fils d'instructions,
- une mémoire morte de type ROM 28 (de l'anglais « Read Only Memory ») et une mémoire vive de type RAM 30 (de l'anglais « Random Access Memory ») pour le stockage de données de traitement et/ou de programmes de démarrage (une application de type BIOS par exemple) et de gestion des périphériques, et
- au moins un disque dur 32.

Ce dispositif informatique 18 comporte éventuellement en outre de façon classique et non représentée sur cette figure l'un ou plusieurs des éléments suivants : un écran, un clavier, une souris, une interface de communication avec le réseau 20 et un lecteur/enregistreur de données sur un support amovible, par exemple un lecteur/enregistreur de CD-ROM ou de DVD.

Le disque dur 32 stocke, sous la forme de fichiers, un système d'exploitation 34 tel que le système Linux chargé par l'application BIOS au démarrage du dispositif informatique 18. Un mécanisme d'exécution entrelacée de fils d'instructions sur plusieurs processeurs virtuels d'une même unité centrale de traitement est activé pour ce système d'exploitation. Par exemple, ce mécanisme est tel que les unités centrales de traitement 24 et 26 présentent chacune deux processeurs virtuels : les processeurs virtuels 24C et 24S pour la première unité centrale de traitement 24 et les processeurs virtuels 26C et 26S pour la seconde unité centrale de traitement 26.

En variante, le système d'exploitation 34 peut être stocké dans des moyens de stockage externe (sur un support externe de type disque dur, sur le réseau, ...). Dans cette variante, le lecteur/enregistreur et l'interface de communication du dispositif informatique 18 sont aptes à transférer les données d'un support externe vers le disque dur 32 pour permettre le chargement du système d'exploitation 34.

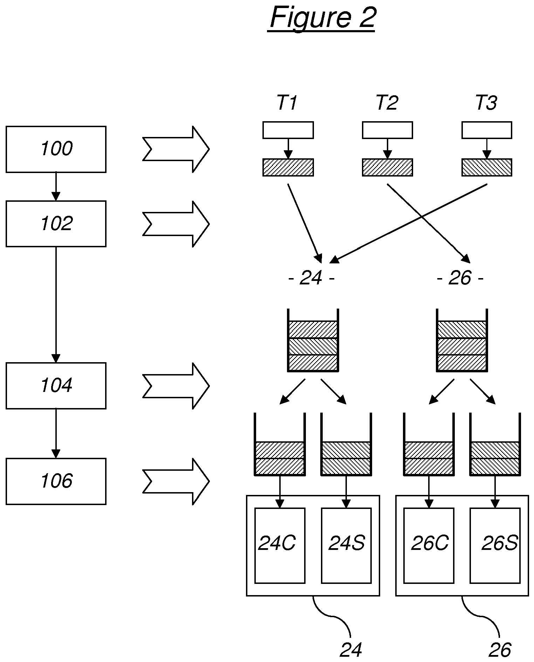

Dans tous les cas, le système d'exploitation 34 est un programme d'ordinateur téléchargeable depuis un réseau de communication et/ou enregistré sur un support lisible par ordinateur et/ou exécutable par un processeur, comprenant des instructions de code de programme pour l'exécution des étapes d'un procédé de gestion de l'exécution entrelacée de plusieurs fils d'instructions qui sera décrit en référence à la figure 2.

D'une façon plus générale, la structure précitée convient à tout type de réseau de dispositifs informatiques, non nécessairement de type HPC, dans lequel le système d'exploitation de chaque dispositif informatique exploite un mécanisme d'exécution entrelacée de fils d'instructions sur des processeurs virtuels.

On notera enfin que le dispositif informatique 18 tel qu'il vient d'être structurellement décrit n'est qu'un exemple non limitatif de dispositif apte à mettre en œuvre l'invention. Une grande diversité d'architectures existe pour la conception de dispositifs informatiques et tout dispositif présentant a minima une unité centrale de traitement à exécution entrelacée de plusieurs fils d'instructions sur plusieurs processeurs virtuels issus de cette même unité centrale de traitement convient.

Conformément à un mode de réalisation de l'invention, le dispositif informatique 18 comporte des moyens 36 de classification des fils d'instructions à exécuter selon plusieurs types prédéterminés et en particulier selon deux types de fils d'instructions :
- un premier type de fils d'instructions, qualifié de « calcul », est relatif, pour un programme destiné à être exécuté par le dispositif informatique 18 de manière à fournir un résultat, à des fils d'instructions participant à l'exécution de ce programme pour la production directe du résultat, et
- un second type de fils d'instructions, qualifié de « service », est relatif à des fils d'instructions participant à l'exécution de ce programme pour offrir des services annexes aux fils d'instructions de type « calcul ».

Les fils d'instructions de service concernent par exemple la sauvegarde des résultats, la gestion de la mémoire, la gestion des entrées/sorties, la communication des données, la surveillance, l'accès aux fichiers, etc.

Selon les applications, les moyens de classification 36 peuvent prendre différentes formes.

Dans une première application, un programme devant être exécuté sollicite l'exécution de plusieurs fils d'instructions dont certains participent au calcul et d'autres aux services annexes. Dans ce cas, ce programme est conçu pour appeler une fonction d'interface de programmation applicative de gestion des fils d'instructions, par exemple la fonction sched_setscheduler() de l'interface de programmation applicative POSIX, sur la base d'un paramètre identifiant le type calcul (HT_CALCUL) ou le type service (HT_SERVICE). Les moyens 36 de classification des fils d'instructions, mis en œuvre par le système d'exploitation 34, consistent alors à reconnaître automatiquement ce paramètre pour identifier le type d'un fil d'instructions à orienter vers un processeur virtuel.

Dans une deuxième application, plusieurs programmes doivent être exécutés, certains étant des programmes de calcul, d'autres des programmes de service. Dans ce cas, l'utilisateur prévoit de lancer l'exécution d'un programme à l'aide d'une commande dans laquelle le type, calcul ou service, est identifiée en paramètre : il s'agit par exemple de la commande ht_sched -[CALCUL ou SERVICE] <nom du programme>. Les moyens 36 de classification des fils d'instructions, mis en œuvre par le système d'exploitation 34, consistent alors à reconnaître automatiquement ce paramètre pour identifier le type d'un fil d'instructions sollicité par un programme.

Dans une troisième application, une bibliothèque MPI (de l'Anglais « Message Passing Interface »), couramment utilisée dans les programmes de calcul parallèles, crée un fil d'instructions propre destiné à des services dans le cadre d'un programme principal lancé en mode calcul (cf. deuxième application). Dans ce cas, elle peut appeler la fonction setscheduler() sur la base d'un paramètre identifiant le type service (HT _SERVICE). Les moyens 36 de classification des fils d'instructions, mis en œuvre par le système d'exploitation 34, consistent alors à reconnaître automatiquement ce paramètre pour identifier le type du fil d'instructions créé par cette bibliothèque MPI.

Dans une quatrième application où le type des fils d'instructions n'est pas spécifié a priori comme indiqué précédemment, les moyens de classification 36 du système d'exploitation 34 peuvent être conçus pour le déterminer de façon automatique, même de façon sommaire, notamment par reconnaissance automatique des applications à l'origine de ces fils d'instructions.

Par ailleurs, le dispositif informatique 18 comporte des moyens d'association de chaque processeur virtuel d'une même unité centrale de traitement à l'un des deux types précités : comme illustré sur la figure 1, ces moyens d'association sont par exemple des paramètres C et S identifiant respectivement le type calcul ou le type service. Ils sont par exemple gérés par l'unité centrale de traitement concernée 24, 26 ou, en variante, par le système d'exploitation 34, de façon explicite ou implicite. Ainsi, dans l'exemple illustré de façon schématique sur la figure 1, le processeur virtuel 24C de la première unité centrale de traitement 24 est de type calcul, le processeur virtuel 24S de la première unité centrale de traitement 24 est de type service, le processeur virtuel 26C de la seconde unité centrale de traitement 26 est de type calcul et le processeur virtuel 26S de la seconde unité centrale de traitement 26 est de type service.

Le système d'exploitation 34 comporte un gestionnaire 38 de distribution de l'exécution de fils d'instructions sur les processeurs virtuels 24C, 24S, 26C et 26S. Plus précisément, ce gestionnaire de distribution 38 est conçu pour orienter chaque fils d'instructions à exécuter vers l'un des processeurs virtuels en fonction de son type et même plus précisément vers un processeur virtuel dont le type est identique au sien. Ainsi, un fil d'instructions de type calcul ne peut être orienté que vers le processeur virtuel 24C ou 26C et un fil d'instructions de type service ne peut être orienté que vers le processeur virtuel 24S ou 26S.

Concrètement, le gestionnaire de distribution 38 comporte :
- des premier moyens logiciels 40 pour sélectionner une unité centrale de traitement 24 ou 26 pour chaque fil d'instructions à exécuter, indépendamment des processeurs virtuels 24C, 24S ou 26C, 26S qu'elle présente, et
- des seconds moyens logiciels 42 pour affecter automatiquement, parmi les processeurs virtuels de l'unité centrale de traitement sélectionnée, celui qui est du même type que le fil d'instructions à exécuter.

Un procédé de gestion de l'exécution entrelacée de plusieurs processus informatiques mis en œuvre par le dispositif informatique 18 de la figure 1 va maintenant être détaillé en référence à la figure 2.

Au cours d'une première étape 100 de classification, des fils d'instructions T1, T2 et T3 en attente d'exécution sont classés selon qu'ils sont de type calcul (hachures vers la droite) ou service (hachures vers la gauche). Ce type peut être défini a priori dans des paramètres de commandes ou de fonctions d'interface de programmation applicative et reconnu automatiquement par les moyens logiciels 36 du système d'exploitation 34, comme cela a été détaillé précédemment. Le type peut aussi être défini directement et automatiquement par les moyens logiciels 36 du système d'exploitation 34.

Au cours d'une étape suivante 102, le gestionnaire de distribution 38 du système d'exploitation 34 sélectionne, à l'aide des moyens logiciels 40, une unité centrale de traitement 24 ou 26 pour chaque fil d'instructions et place ce fil d'instructions dans une file d'attente de l'unité centrale de traitement sélectionnée.

Ensuite, lors d'une étape 104 d'affectation de chaque fil d'instructions à un processeur virtuel réalisée par les moyens logiciels 42, chaque fil d'instructions placé dans la file d'attente d'une unité centrale de traitement 24 ou 26 est en fait automatiquement placé dans une file d'attente du processeur virtuel de cette unité centrale de traitement 24 ou 26 qui est du même type que ce fil d'instructions.

Enfin, lors d'une étape d'exécution 106, chaque fil d'instructions est exécuté par le processeur virtuel qui lui a été affecté à l'étape précédente.

Il apparaît clairement qu'un dispositif informatique 18 tel que celui décrit précédemment permet de faciliter la gestion de l'exécution de fils d'instructions sur plusieurs processeurs virtuels.

Dans l'état de la technique, le système d'exploitation, chargé dans un dispositif informatique apte à mettre en œuvre un mécanisme d'exécution entrelacée de fils d'instructions sur des processeurs virtuels, présente tous les processeurs virtuels comme des supports de calcul génériques et rend la distribution des fils d'instructions plus complexe.

Selon l'invention, la distribution des fils d'instructions par le système d'exploitation est simplifiée et on tire davantage profit du mécanisme d'exécution entrelacée des fils d'instructions, notamment dans un environnement à forte sollicitation en calcul tel qu'un supercalculateur HPC ou qu'un processeur mettant en œuvre une application de calcul en temps réel. Plus précisément, dans le mode de réalisation décrit précédemment, deux processeurs virtuels d'une même unité centrale de traitement sont présentés, non pas comme deux supports de calcul interchangeables, mais comme un support d'exécution principale pour les calculs et un support d'exécution secondaire pour les services annexes. Ainsi, un dispositif informatique 18 généralisé à N unités centrales de traitement, même s'il met en œuvre le mécanisme d'exécution entrelacée de fils d'instructions, ne présente en fait à l'utilisateur (et au système d'exploitation) que ses N unités centrales de traitement, comme s'il ne mettait pas en œuvre ce mécanisme. Par conséquent, on tire profit de ce mécanisme sans avoir à en subir les contraintes de gestion dans la distribution des fils d'instructions.

L'affectation automatique des fils d'instructions au processeur virtuel de l'unité centrale de traitement sélectionnée leur permet de se répartir sur les processeurs virtuels en fonction de leur rôle et de leurs contraintes, sans que l'utilisateur ou le système d'exploitation n'ait à intervenir dans cette répartition.

Une fois que les fils d'instructions sont répartis, il est clair que l'avantage de mettre en œuvre le mécanisme d'exécution en parallèle sur deux processeurs virtuels d'une même unité centrale de traitement réside dans les points suivants :
- l'unité centrale de traitement gère deux files d'attente différentes et n'a donc plus besoin de gérer le passage d'un fils d'instructions à l'autre, cette exécution simultanée étant gérée par le matériel,
- en particulier, lorsqu'il ne reste plus qu'un fil d'instructions à exécuter par processeur virtuel, l'unité centrale de traitement peut laisser les processeurs virtuels exécuter le code sans les interrompre,
- le passage d'un programme à l'autre se fait instruction par instruction.

Cette granularité très fine peut se révéler intéressante, notamment dans le cas de démons pouvant provoquer des perturbations. En effet, le processeur virtuel de calcul d'une même unité centrale de traitement sera alors ralenti et non bloqué pendant un temps constant par le processeur virtuel de service. L'effet des perturbations (démons et interruptions) se trouve alors largement réduit en faveur du processeur virtuel de calcul.

Dans un environnement HPC, on peut ainsi positionner le code de calcul sur le processeur virtuel de calcul et les services annexes sur le processeur virtuel de service, et ceci de façon transparente pour des outils d'exploitation tels que les gestionnaires de batch. Dans un environnement temps réel, cela permet d'isoler automatiquement un fil d'instructions critique de tous les autres fils d'instructions de service, en lui garantissant au pire 50% du temps d'exécution disponible sur l'unité centrale de traitement sélectionnée et aucune interruption due à l'ordonnancement.

Enfin, pour une compatibilité du dispositif informatique 18 avec des programmes ne prenant pas en compte cette fonctionnalité d'affecter a priori un type à chaque fil d'instructions, il paraît clair que par défaut les fils d'instructions doivent être orientés vers un processeur virtuel de service. En effet, tous les démons lancés par le système d'exploitation doivent s'exécuter sur un processeur virtuel de service afin de ne pas perturber le calcul. Seul le code de calcul devra donc être adapté spécifiquement pour orienter ses fils d'instructions vers un processeur virtuel de calcul. Cette adaptation n'est pas nécessairement à faire depuis le programme lui-même, mais peut être effectuée dans des outils externes, comme les bibliothèques MPI précitées par exemple.

On notera par ailleurs que l'invention n'est pas limitée au mode de réalisation décrit précédemment. Notamment, si chaque unité centrale de traitement est apte à mettre en œuvre un mécanisme lui permettant de présenter plus de deux processeurs virtuels, il peut être avantageux de définir plus de deux types de fils d'instructions.

On notera aussi, comme cela a été suggéré à plusieurs reprises précédemment, que l'installation de supercalculateur HPC illustrée sur la figure 1 n'est pas la seule dans laquelle l'invention peut être mise en œuvre. Dans une configuration beaucoup plus simple, par exemple de calcul temps réel et/ou de traitement embarqué, l'invention peut être mise en œuvre dès lors que l'on dispose d'un simple processeur (ou bien d'un ordinateur présentant un tel processeur) comportant au moins une unité centrale de traitement à exécution entrelacée de plusieurs fils d'instructions sur plusieurs processeurs virtuels.

D'une façon plus générale, il apparaîtra à l'homme de l'art que diverses modifications peuvent être apportées au mode de réalisation décrit ci-dessus, à la lumière de l'enseignement qui vient de lui être divulgué. Dans les revendications qui suivent, les termes utilisés ne doivent pas être interprétés comme limitant les revendications au mode de réalisation exposé dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en œuvre de l'enseignement qui vient de lui être divulgué.

## Revendications

1. Système informatique (18) de gestion de l'exécution de fils d'instructions, comportant :
- au moins une unité centrale de traitement (24, 26) à exécution entrelacée de plusieurs fils d'instructions sur deux processeurs virtuels (24C, 24S, 26C, 26S) issus de cette même unité centrale de traitement, l'un associé à un premier type (C) de fils d'instructions, l'autre associé à un second type (S) de fils d'instructions,
- des moyens (36) de classification des fils d'instructions à exécuter selon soit le premier type, soit le second type, et
- un gestionnaire (38) de distribution de l'exécution des fils d'instructions sur les processeurs virtuels, conçu pour orienter chaque fil d'instructions à exécuter vers un processeur virtuel (24C, 24S, 26C, 26S) dont le type est identique au sien,
dans lequel :
- le premier type (C) de fils d'instructions, qualifié de « calcul », est relatif, pour un programme destiné à être exécuté par le système informatique de manière à fournir un résultat, à des fils d'instructions participant à l'exécution de ce programme pour la production directe du résultat, et
- le second type (S) de fils d'instructions, qualifié de « service », est relatif à des fils d'instructions participant à l'exécution de ce programme pour offrir des services annexes aux fils d'instructions de type « calcul ».

2. Système informatique selon la revendication 1, comportant au moins deux unités centrales de traitement (24, 26), chacune présentant plusieurs processeurs virtuels (24C, 24S, 26C, 26S) et étant à exécution entrelacée de plusieurs fils d'instructions sur ses processeurs virtuels, et dans lequel le gestionnaire (38) de distribution de l'exécution des fils d'instructions est conçu pour sélectionner une unité centrale de traitement pour chaque fil d'instructions à exécuter, indépendamment des processeurs virtuels qu'elle présente.

3. Procédé de gestion de l'exécution entrelacée de plusieurs fils d'instructions sur deux processeurs virtuels (24C, 24S, 26C, 26S) issus d'une même unité centrale de traitement (24, 26) d'un système informatique (18), l'un (24C, 26C) des deux processeurs virtuels étant associé à un premier type (C) de fils d'instructions, l'autre (24S, 26S) des deux processeurs virtuels étant associé à un second type (S) de fils d'instructions, comportant :
- une étape préalable (100) de classification des fils d'instructions à exécuter selon soit le premier type, soit le second type, et
- une étape (104) de distribution de l'exécution des fils d'instructions sur les processeurs virtuels, lors de laquelle chaque fil d'instructions à exécuter est orienté vers un processeur virtuel dont le type est identique au sien,
dans lequel :
- le premier type (C) de fils d'instructions, qualifié de « calcul », est défini comme étant relatif, pour un programme destiné à être exécuté par le système informatique de manière à fournir un résultat, à des fils d'instructions participant à l'exécution de ce programme pour la production directe du résultat, et
- le second type (S) de fils d'instructions, qualifié de « service », est relatif à des fils d'instructions participant à l'exécution de ce programme pour offrir des services annexes aux fils d'instructions de type « calcul ».

4. Procédé selon la revendication 3, dans lequel, lors de l'étape de classification (100), chaque fil d'instructions est classé dans un type sur la base d'un paramètre identifiant ce type dans une fonction d'interface de programmation applicative de gestion du fil d'instructions.

5. Procédé selon la revendication 3, dans lequel, lors de l'étape de classification (100), chaque fil d'instructions est classé dans un type sur la base d'un paramètre identifiant ce type dans une commande d'exécution de programme impliquant l'exécution de ce fil d'instructions.

6. Application d'un procédé selon l'une quelconque des revendications 3 à 5 à la gestion de l'exécution de plusieurs fils d'instructions sur plusieurs nœuds de traitement d'une grappe (10) de serveurs de type supercalculateur, dans laquelle chaque nœud de traitement (18) comporte au moins une unité centrale de traitement (24, 26) à exécution entrelacée de plusieurs fils d'instructions sur plusieurs processeurs virtuels (24C, 24S, 26C, 26S) issus de cette même unité centrale de traitement.

7. Programme d'ordinateur téléchargeable depuis un réseau de communication et/ou enregistré sur un support lisible par ordinateur et/ou exécutable par un processeur, notamment système d'exploitation (34) d'un ordinateur, **caractérisé en ce qu'**il comprend des instructions de code de programme pour l'exécution des étapes d'un procédé de gestion de l'exécution entrelacée de plusieurs fils d'instructions selon l'une quelconque des revendications 3 à 5 lorsque ledit programme est exécuté sur un ordinateur.

## Patentansprüche

1. Computersystem (18) zur Verwaltung der Ausführung von Anweisungsthreads, umfassend:
- mindestens eine zentrale Verarbeitungseinheit (24, 26) zur verschachtelten Ausführung von mehreren Anweisungsthreads auf zwei virtuellen Prozessoren (24C, 24S, 26C, 26S), die von dieser selbigen zentralen Verarbeitungseinheit ausgehen, wobei einer mit einem ersten Typ (C) von Anweisungsthreads assoziiert ist und der andere mit einem zweiten Typ (S) von Anweisungsthreads assoziiert ist,
- Mittel (36) zur Klassifizierung von auszuführenden Anweisungsthreads gemäß entweder dem ersten Typ oder dem zweiten Typ, und
- einen Manager (38) zur Verteilung der Ausführung von Anweisungsthreads auf die virtuellen Prozessoren, der dazu ausgelegt ist, jeden auszuführenden Anweisungsthread zu einem virtuellen Prozessor (24C, 24S, 26C, 26S) zu leiten, dessen Typ gleich ist,
wobei:
- der erste Typ (C) von Anweisungsthreads, der als "Berechnung" charakterisiert ist, sich für ein Programm, das dazu vorgesehen ist, durch das Computersystem ausgeführt zu werden, um ein Ergebnis zu liefern, auf Anweisungsthreads bezieht, die an der Ausführung dieses Programms zur direkten Erzeugung des Ergebnisses beteiligt sind, und
- der zweite Typ (S) von Anweisungsthreads, der als "Dienst" charakterisiert ist, sich auf Anweisungsthreads bezieht, die an der Ausführung dieses Programms beteiligt sind, um zusätzliche Dienste zu den Anweisungsthreads vom Typ "Berechnung" anzubieten.

2. Computersystem nach Anspruch 1, das mindestens zwei zentrale Verarbeitungseinheiten (24, 26) umfasst, wobei jede mehrere virtuelle Prozessoren (24C, 24S, 26C, 26S) darstellt und zur verschachtelten Ausführung von mehreren Anweisungsthreads auf ihren virtuellen Prozessoren ist, und wobei der Manager (38) zur Verteilung der Ausführung von Anweisungsthreads dazu ausgelegt ist, eine zentrale Verarbeitungseinheit für jeden auszuführenden Anweisungsthread unabhängig von den virtuellen Prozessoren, die sie aufweist, auszuwählen.

3. Verfahren zur Verwaltung der verschachtelten Ausführung von mehreren Anweisungsthreads auf zwei virtuellen Prozessoren (24C, 24S, 26C, 26S), die von ein und derselben zentralen Verarbeitungseinheit (24, 26) eines Computersystems (18) ausgehen, wobei einer (24C, 26C) der zwei virtuellen Prozessoren mit einem ersten Typ (C) von Anweisungsthreads assoziiert ist und der andere (24S, 26S) der zwei virtuellen Prozessoren mit einem zweiten Typ (S) von Anweisungsthreads assoziiert ist, umfassend:
- einen vorhergehenden Schritt (100) einer Klassifizierung von auszuführenden Anweisungsthreads gemäß entweder dem ersten Typ oder dem zweiten Typ und
- einen Schritt (104) einer Verteilung der Ausführung von Anweisungsthreads auf die virtuellen Prozessoren, in dem jeder auszuführende Anweisungsthread zu einem virtuellen Prozessor geleitet wird, dessen Typ gleich ist,
wobei:
- der erste Typ (C) von Anweisungsthreads, der als "Berechnung" charakterisiert ist, als sich für ein Programm, das dazu vorgesehen ist, durch das Computersystem ausgeführt zu werden, um ein Ergebnis zu liefern, auf Anweisungsthreads beziehend definiert ist, die an der Ausführung dieses Programms zur direkten Erzeugung des Ergebnisses beteiligt sind, und
- der zweite Typ (S) von Anweisungsthreads, der als "Dienst" charakterisiert ist, sich auf Anweisungsthreads bezieht, die an der Ausführung dieses Programms beteiligt sind, um zusätzliche Dienste zu den Anweisungsthreads vom Typ "Berechnung" anzubieten.

4. Verfahren nach Anspruch 3, wobei während des Schritts der Klassifizierung (100) jeder Anweisungsthread in einen Typ auf der Basis eines Parameters klassifiziert wird, der diesen Typ in einer Funktion einer Anwendungsprogrammierschnittstelle zur Verwaltung des Anweisungsthreads identifiziert.

5. Verfahren nach Anspruch 3, wobei während des Schritts der Klassifizierung (100) jeder Anweisungsthread in einen Typ auf der Basis eines Parameters klassifiziert wird, der diesen Typ in einem Befehl zur Ausführung eines Programms identifiziert, das die Ausführung dieses Anweisungsthreads impliziert.

6. Anwendung eines Verfahrens nach einem der Ansprüche 3 bis 5 zur Verwaltung der Ausführung von mehreren Anweisungsthreads auf mehreren Verarbeitungsknoten einer Serverfarm (10) vom Supercomputertyp, wobei jeder Verarbeitungsknoten (18) mindestens eine zentrale Verarbeitungseinheit (24, 26) zur verschachtelten Ausführung von mehreren Anweisungsthreads auf mehreren virtuellen Prozessoren (24C, 24S, 26C, 26S), die von dieser selbigen zentralen Verarbeitungseinheit ausgehen, umfasst.

7. Computerprogramm, das von einem Kommunikationsnetzwerk herunterladbar ist und/oder auf einem durch einen Computer lesbaren Träger gespeichert ist und/oder durch einen Prozessor, insbesondere einem Betriebssystem (34) eines Computers ausführbar ist, **dadurch gekennzeichnet, dass** es Anweisungen eines Programmcodes zur Ausführung von Schritten eines Verfahrens zur Verwaltung der verschachtelten Ausführung von mehreren Anweisungsthreads nach einem der Ansprüche 3 bis 5, wenn das Programm auf einem Computer ausgeführt wird, umfasst.

## Claims

1. Computer system (18) for managing the execution of threads, comprising:
- at least one central processing unit (24, 26) having interleaved execution of a plurality of threads throughout two virtual processors (24C, 24S, 26C, 26S) from said same central processing unit, one associated with a first type (C) of threads, the other associated with a second type (S) of threads,
- means (36) for classifying the threads to be executed according either to the first type, or the second type, and
- a handler (38) for distributing the execution of the threads throughout the virtual processors, designed for directing each thread to be executed to a virtual processor (24C, 24S, 26C, 26S) whose type is identical to the type thereof,
wherein:
- the first type (C) of threads, referred to as "calculation", relates, for a program intended to be executed by the computer system so as to provide a result, to threads participating to the execution of this program for the direct production of the result, and
- the second type (S) of threads, referred to as "service", relates to threads participating to the execution of this program to provide annex services to threads of the "calculation" type.

2. Computer system according to claim 1, comprising at least two central processing units (24, 26), each having several virtual processors (24C, 24S, 26C, 26S) and having interleaved execution of a plurality of threads throughout its virtual processors, and wherein the handler (38) for distributing the execution of the threads is designed to select a central processing unit for each thread to be executed, regardless of the virtual processors which it has.

3. Method for managing the interleaved execution of a plurality of threads throughout two virtual processors (24C, 24S, 26C, 26S) from a same central processing unit (24, 26) of a computer system (18), one (24C, 26C) of the two virtual processors being associated with a first type (C) of threads, the other (24S, 26S) of the two virtual processors being associated with a second type (S) of threads, comprising:
- a preliminary step (100) for classifying the threads to be executed according either to the first type, or the second type, and
- a step (104) of distributing the execution of the threads throughout the virtual processors, during which each thread to be executed is directed to a virtual processor whose type is identical to the type thereof,
wherein:
- the first type (C) of threads, referred to as "calculation", is defined as relating, for a program intended to be executed by the computer system so as to provide a result, to threads participating to the execution of this program for the direct production of the result, and
- the second type (S) of threads, referred to as "service", relates to threads participating to the execution of this program to provide annex services to threads of the "calculation" type.

4. Method according to claim 3, wherein, during the classification step (100), each thread is classified into a type based on a parameter identifying this type in a function of an application programming interface for managing the thread.

5. Method according to claim 3, wherein, during the classification step (100), each thread is classified into a type based on a parameter identifying this type in a command for executing a program involving the execution of said thread.

6. Application of a method according to any of claims 3 to 5 to the management of the execution of several threads over several processing nodes of a cluster (10) of servers of the supercomputer type, wherein each processing node (18) comprises at least one central processing unit (24, 26) having interleaved execution of a plurality of threads throughout a plurality of virtual processors (24C, 24S, 26C, 26S) from said same central processing unit.

7. Computer program downloadable from a communication network and/or recorded on a medium readable by computer and/or executable by a processor, particularly operating system (34) of a computer, **characterized in that** it comprises program code instructions for the execution of the steps of a method for managing the interleaved execution of several threads according to any of claims 3 to 5 when said program is executed on a computer.
